**Europäisches Patentamt**

**European Patent Office**

**Office européen des brevets**

(11) Veröffentlichungsnummer: **0 128 966**
**B1**

(12) **EUROPÄISCHE PATENTSCHRIFT**

(45) Veröffentlichungstag der Patentschrift:
07.01.87

(21) Anmeldenummer: 83105866.4

(22) Anmeldetag: 15.06.83

(51) Int. Cl.⁴: **C 02 F 11/00, C 04 B 18/00**

(54) Verfahren zur Entsorgung von Industrieschlämmen.

(43) Veröffentlichungstag der Anmeldung:
27.12.84 Patentblatt 84/52

(45) Bekanntmachung des Hinweises auf die Patenterteilung:
07.01.87 Patentblatt 87/2

(84) Benannte Vertragsstaaten:
BE DE FR GB IT NL

(56) Entgegenhaltungen:
DE - A - 2 241 524
FR - A - 2 440 777
US - A - 4 028 130

CHEMICAL ABSTRACTS, Band 79, Nr. 8, 22.10.1974,
Seite 275, Zusammenfassung 96271u, COLUMBUS,
OHIO (US)
JAPANESE PATENTS REPORT, Band 78, Nr. 22, 30. Juni
1978, Derwent Publications, London, Seite J7-J,
Zusammenfassung J7 8015463, "Heavy metal sludge
treatment" (HITACHI SHIPBUILDING ENGINEERING
KK).

(73) Patentinhaber: **Fritsch, Georg, Dr., Kettelerstrasse 16,
D-4620 Castrop-Rauxel (DE)**

(72) Erfinder: **Fritsch, Georg, Dr., Kettelerstrasse 16,
D-4620 Castrop-Rauxel (DE)**

(74) Vertreter: **Herrmann-Trentepohl, Werner, Dipl.-Ing. et al,
Postfach 1140 Schaeferstrasse 18, D-4690 Herne 1 (DE)**

## Beschreibung

Die Erfindung betrifft ein Verfahren zur Entsorgung von Industrieschlämmen, deren Beseitigung z.B. nach Abtrocknen in Schlammbeeten oft problematisch ist. Bei Klärschlämmen stösst z.B. ihre Verwendung als Düngemittel wegen der häufig vorhandenen giftigen Inhaltsstoffe, insbesondere Cadmium auf wachsenden Widerstand.

Neben den Industrieschlämmen sind auch Säureharze, -teere und -öle gefürchtete Abfallstoffe. Diese fallen z.B. bei der Raffination von Rohölen und Altölen mittels Schwefelsäure an. Sie stellen ein schwarzes teeriges Produkt dar, das im wesentlichen aus polymolekularen Stoffen, Sulfonaten, Schwefelsäureestern und Schwefelsäure besteht. Eine Aufarbeitung dieser Abfallprodukte durch Erhitzen bis zur Zersetzung ist äusserst kostspielig und erfordert die Rückgewinnung der dabei freiwerdenden Schwefelsäure.

Es ist zwar aus der US-A-4 028 130 die Vermischung von chemisch modifiziertem Schlamm mit Kalk, einem puzzolanischen Zement wie Flugasche und eisenoxidhaltigem Rotschlamm sowie gegebenenfalls mit Zement bekannt. Ferner ist aus der DE-A-2 241 524 ein Verfahren zur Neutralisierung und Verfestigung von Säureharzen mit Hilfe von Kalkmilch und Zement bekannt. Weiterhin ist in den CHEMICAL ABSTRACTS, Band 79, 1974, Seite 275, Nr. 9621 u ein Zuschlagstoff auf der Basis von Schlamm und Zement beschrieben. Schliesslich ist es aus Band 78 des JAPANESE PATENTS REPORT, Seite J 7-J, J7 8015463 bekannt, Abwasserschlamm und gegebenenfalls Fe$_2$O$_3$-Pulver und/oder Ton zu brennen.

Diese Verfahren sind jedoch nicht in der Lage, die gemeinsame Entsorgung von Industrieschlämmen, Säureharzen und Säureölen zu gewährleisten.

Aufgabe der Erfindung ist es daher, Industrieschlämme sowie auch die die Umwelt besonders belastenden Säureharze, -teere und -öle in unschädlicher Form und kostengünstig zu beseitigen.

Diese Aufgabe wird erfindungsgemäss dadurch gelöst, dass die Industrieschlämme im Gewichtsverhältnis 10 : 1 bis 1 : 10 mit groben oder feinkörnigen Pulvern oder Schlämmen vermischt werden, die im Gewichtsverhältnis von etwa 2 : 1 bis 1 : 2 aus Säureharzen, -teeren und/oder -ölen einerseits und andererseits aus vorwiegend Eisenoxid enthaltenden Oxidmischungen bestehen, woraufhin diese Mischung unter Bildung einer mörtelartigen Masse mit einem Zement vermischt wird.

Überraschenderweise hat sich gezeigt, dass ein Gemisch aus Säureharz (dieses steht im folgenden stets für Säureharze, -teere und/oder -öle) und vorwiegend Eisenoxid enthaltende Oxidmischungen eine günstige Wirkung auf die Einbindung von Industrieschlämmen in Zemente ausübt. Während ohne diese Gemische nur wenig feste Betone gebildet werden, besitzen die aus erfindungsgemässem Mörtel gebildeten Betone eine hohe Festigkeit und Dichte, so dass ein leichtes Herauslösen der für das Grundwasser schädlichen Schwermetallsalze bei Ablagerung, z.B. in Form von grobstückigem Material nachhaltig vermieden wird. Das Mengenverhältnis von

Gemisch bzw. Oxid zum Industrieschlamm richtet sich nach dem Verhalten des Schlammes gegenüber seiner Einbindung in Zemente. Bei wasserabweisende Substanzen enthaltenden Schlämmen empfehlen sich höhere Oxidanteile im Gemisch mit einem Säureharz und umgekehrt. Als Oxide kommen vor allem Abfalloxide aus der Industrie in Betracht, insbesondere Gemische aus 24 bis 45 Gew.-% Fe$_2$O$_3$, 15 bis 28 Gew.-% Al$_2$O$_3$, 3 bis 11 Gew.-% TiO$_2$, 2 bis 20 Gew.-% SiO$_2$, 5 bis 12 Gew.-% Na$_2$O und 1 bis 3 Gew.-% CaO. Derartige Gemische sind als Pulver oder Schlamm mit 35 bis 98,5 Gew.-% Trockensubstanz im Handel erhältlich und enthalten häufig auch gewisse Mengen an Hydroxiden, wodurch ihre Wirksamkeit nicht beeinträchtigt wird.

In einer ersten Stufe werden diese Oxide mit den in der Regel stark nach SO$_2$ riechenden Säureharzen vermischt, wobei, wie sich überraschenderweise gezeigt hat, keine wie sonst üblich intensive SO$_2$-Entwicklung bemerkbar ist. Vielmehr wird sogar der bisherige SO$_2$-Geruch neutralisiert. Weiterhin hat sich überraschenderweise gezeigt, dass dieses Gemisch aus Säureharz und Oxiden sich praktisch in jedem Verhältnis mit Industrieschlämmen der unterschiedlichsten Zusammensetzung und ohne ein Wiederfreisetzen des eingebundenen SO$_2$ vermischen lässt und überdies, wie gesagt, zur Festigkeit und Dichte der mit Zementen oder ähnlich wirksamen Bindern eingebundenen Schlämme deutlich beiträgt.

Als Industrieschlämme kommen insbesondere die in den Schlammbeeten der Wasserreinigungsanlagen oder sonstwie abgetrockneten Klärschlämme in Betracht. Weitere Industrieschlämme sind z.B. Galvanikschlamm, Schleifschlamm, Farbschlamm, Jarositschlamm aus der Erzaufbereitung und sonstige Schlämme aus der Erzaufbereitung, Bleisulfat-Schwefelsäureschlamm, Teerschlamm, Ölschlamm, Hafenschlamm und Hydroxidschlamm. Als Zemente kommen praktisch alle bekannten Zemente und zementartig wirksamen Bindemittel in Betracht, wie z.B. Portland-, Hochofen-, Tonerde-, Secar-, Trass- und Sorelzement. Es ist jedoch auch möglich, den Zement ganz oder teilweise durch Kalk in Form von Kalkhydrat oder Ätzkalk zu ersetzen.

Ebenfalls ist es möglich, den Zement ganz oder teilweise durch Flugstaub zu ersetzen.

In einer weiteren Abwandlung der Erfindung kann der Zement ganz oder teilweise durch Kaolin ersetzt werden.

Der erfindungsgemässe Mörtel erstarrt zu Betonen von erheblicher Festigkeit und kann vor dem Abbinden auf Formkörper, also betonartige Steine verarbeitet oder nach vollständigem oder teilweisem Abbinden über Zerkleinerer zu Füllstoff verarbeitet werden. Das Vermischen der Komponenten erfolgt zweckmässigerweise in Zwangsmischern, wobei ein gewisses Zerreiben oder Vermahlen der Mischungen erzielt wird.

Da durch eine Zugabe von Kalkhydrat oder Ätzkalk der pH-Wert des Mörtels beliebig einstellbar ist, können, sofern in den abgebundenen Betonen durch Auslaugen keine bodenschädliche Inhaltsstoffe festgestellt werden können, diese, gegebenenfalls nach Zerkleinern als Bodenverbesserungsmittel dienen.

Dabei lässt sich mühelos der jeweils vorhandene Säuren- oder Basencharakter des Garten- oder landwirtschaftlich genutzten Landes berücksichtigen. Da in wässrigen Eluaten erfindungsgemässer Verfestigungsprodukte in der Regel kein erhöhter Anteil an Blei-, Zink-, Kupfer-, Chrom- und Eisenionen festzustellen ist, ist das Verfahren jedenfalls von hoher Umweltfreundlichkeit.

Ersetzt man den Zement ganz oder teilweise durch Kaolin, so kann man nach Pelletieren der Mischung und Erhitzen der Pellets auf 1250°C diese Produkte als Ersatz für Tonerdepellets oder Bims verwenden.

Ferner ist es möglich, eine derartige kaolinhaltige Mischung als Baumaterial in Form von gebrannten Steinen zu verwenden.

Die Beispiele zeigen die Vielseitigkeit des erfindungsgemässen Verfahrens für die Entsorgung von Schlämmen insbesondere die mengenmässige Abstimmung der Ausgangskomponenten aufeinander. Der Mörtel kann sofort in Formen abgefüllt und somit zu Steinen unterschiedlicher Form verarbeitet werden. Stattdessen kann man den Mörtel nach dem Erstarren zu einem grob- oder feinkörnigen Füllstoff oder Düngemittel verarbeiten.

*Beispiel 1*

14 Gew.-Teile Säureharz werden mit 12 Gew.-Teilen eines Oxidgemisches bestehend aus etwa 38 Gew.-% $Fe_2O_3$, 25 Gew.-% $Al_2O_3$, 3 Gew.-% $TiO_2$, 20 Gew.-% $SiO_2$, 10 Gew.-% $Na_2O$ und 3 Gew.-% CaO, innig vermischt und sodann das gebildete Pulver mit 55 Gew.-Teilen Klärschlamm (Wassergehalt etwa 85%) im Gewichtsverhältnis 1 : 1 verrührt. In diese Schlammischung werden noch 7 Gew.-Teile Flugstaub, 5-Gew.-Teile Hochofenzement und 7 Gew.-Teile Kalkhydrat eingemischt.

Es wird ein grauer bis braunschwarzer Mörtel gebildet, der nach 4 bis 8 Stunden mehr und mehr zu einer festen Masse erstarrt. Diese besitzt nach 28 Tagen eine Druckfestigkeit von ca. 250 N/cm$^2$.

Im folgenden werden weitere in Betracht kommende Ausgangsmischungen angegeben, wobei die als vorwiegend angegebenen Gew.-Teile zu Betonen der angegebenen Festigkeiten führen. Teile steht in allen Beispielen für Gewichtsteile.

*Beispiel 2*

| 15 bis | 45 Teile Säureharz | vorwiegend | 25 bis 35 T. |
| 20 » | 40 » Oxidgemisch | » | 25 » 35 T. |
| 50 » 100 » | Klärschlamm (Wassergehalt 75%) | » | 75 » 80 T. |
| 5 » | 40 » Teerschlamm | » | 15 » 25 T. |
| 5 » | 40 » Flugstaub | » | 15 » 30 T. |
| 10 » | 40 » Trasszement | » | 20 » 30 T. |

Es entsteht ein schwarzgrauer Mörtel mit einer Druckfestigkeit von 180 - 250 N/cm$^2$ nach 28 Tagen.

*Beispiel 3*

| 10 bis | 40 Teile Säureteer | vorwiegend | 15 bis 25 T. |
| 15 » | 35 » Oxidgemisch (32% $Fe_2O_3$) | » | 20 » 30 T. |
| 60 » 100 » | Klärschlamm | » | 70 » 80 T. |
| 2 bis | 20 Teile Kalkhydrat | vorwiegend | 10 bis 15 T. |
| 5 » | 10 » Sorelzement | » | 8 » 10 T. |

Es entsteht eine graue bis schwarze Mörtelmasse, die nach 8 bis 12 Stunden erstarrt. Nach 28 Tagen wird eine Druckfestigkeit von 150 - 200 N/cm$^2$ erreicht.

*Beispiel 4*

| 10 bis | 40 Teile Säureharz | vorwiegend | 15 bis 30 T. |
| 10 » | 50 » Oxidgemisch (28% $Fe_2O_3$) | » | 15 » 25 T. |
| 60 » 100 » | Klärschlamm | » | 75 » 80 T. |
| 3 » | 10 » Portlandzement | » | 4 » 7 T. |

Es entsteht ein plastischer Mörtel, der nach 3 - 10 Stunden erstarrt. Nach 28 Tagen wird eine Druckfestigkeit von 200 - 300 N/cm$^2$ erreicht.

*Beispiel 5*

| 15 bis | 40 Teile Säureharz | vorwiegend | 25 bis 35 T. |
| 15 » | 40 » Oxidgemisch (38% $Fe_2O_3$) | » | 30 » 33 T. |
| 60 » 100 » | Klärschlamm (Wassergehalt 85%) | » | 25 » 30 T. |
| 20 » | 50 » Galvanikschlamm | » | 25 » 30 T. |
| 25 » | 50 » Flugstaub | » | 30 » 40 T. |
| 15 » | 40 » Hochofenzement | » | 25 » 35 T. |

Es entsteht ein grauschwarzer plastischer Mörtel, der nach 3 - 8 Stunden erstarrt. Nach 28 Tagen wird eine Druckfestigkeit von 80 bis 250 N/cm$^2$ erreicht.

*Beispiel 6*

| 15 bis | 40 Teile Säureharz | vorwiegend | 20 bis 35 T. |
| 20 » | 35 » Oxidpulver (30% $Fe_2O_3$) | » | 25 » 30 T. |
| 60 » 100 » | Klärschlamm (Wassergehalt 70%) | » | 70 » 80 T. |
| 30 » | 80 » Flugstaub | » | 40 » 70 T. |
| 30 » | 80 » Hydroxidschlamm | » | 45 » 60 T. |
| 10 » | 25 » Hochofenzement | » | 15 » 20 T. |

Es entsteht ein grauschwarzer Mörtel, der nach 4 bis 10 Stunden erstarrt. Nach 28 Tagen wird eine Druckfestigkeit von 100 - 200 N/cm$^2$ erreicht.

*Beispiel 7*

| 15 bis | 40 Teile Säureöl | vorwiegend | 20 bis 25 T. |
| 25 » | 50 » Oxidgemisch gem. Beispiel 1 | » | 35 » 45 T. |
| 60 » 100 » | Klärschlamm | » | 75 » 80 T. |
| 10 » | 40 » Flugstaub | » | 25 » 30 T. |
| 10 » | 30 » Ölschlamm | » | 15 » 20 T. |

Es entsteht eine dunkelbraune Masse, die nach etwa 20 Stunden erstarrt. Nach 28 Tagen wird eine Druckfestigkeit von 150 - 200 N/cm$^2$ erreicht.

*Beispiel 8*

| 30 bis | 60 Teile Säureharz | vorwiegend | 40 bis 50 T. |
| 30 » | 70 » Oxidpulver (45% $Fe_2O_3$) | » | 45 » 55 T. |
| 10 » | 35 » Secarzement | » | 15 » 30 T. |
| 10 » | 40 » Kaolinschlamm | » | 15 » 25 T. |

Das Gemisch wird in Ziegelform zum Erstarren gebracht. Die Steine werden bei etwa 1250°C gebrannt. Es entsteht ein gut haltbarer Ziegelstein.

*Beispiel 9*

| | | | | | | | |
|---|---|---|---|---|---|---|---|
| 15 bis | 40 | Teile | Säureharz | vorwiegend | 20 bis 25 | T. |
| 30 » | 60 | » | Oxidschlamm (Wassergeh. 40%) | » | 35 » 45 | T. |
| 25 » | 85 | » | Abwasserschlamm (Wassergehalt 65%) | » | 40 » 60 | T. |
| 15 » | 75 | » | Kaolinerde | » | 40 » 60 | T. |
| 1 » | 5 | » | Hochofenzement | » | 2 » 3 | T. |

Es entsteht eine dunkelgraue Masse, die sich zu Pellets verformen lässt. Nach Brennen bei 1250°C können diese Pellets als Ersatz für Tonerdepellets oder Bims dienen.


**Patentansprüche**

1. Verfahren zur Entsorgung von Industrieschlämmen unter Verwendung von Zement, dadurch gekennzeichnet, dass diese im Gewichtsverhältnis von 10 : 1 bis 1 : 10 mit grob- bis feinkörnigen Pulvern oder Schlämmen, bestehend im Gewichtsverhältnis von etwa 2 : 1 bis 1 : 2 aus Säureharzen, -teeren und/oder -ölen einerseits und andererseits aus vorwiegend Eisenoxid enthaltenden Oxidmischungen vermischt werden, woraufhin diese Mischung unter Bildung einer mörtelartigen Masse mit einem Zement vermischt wird.

2. Verfahren nach Anspruch 1, dadurch gekennzeichnet, dass das Oxidgemisch vorwiegend Eisen in Form von $Fe_2O_3$ enthält.

3. Verfahren nach Anspruch 1 und 2, dadurch abgewandelt, dass der Zement ganz oder teilweise durch Kalk in Form von Kalkhydrat oder Ätzkalk ersetzt wird.

4. Verfahren nach Anspruch 1 und 2, dadurch abgewandelt, dass der Zement ganz oder teilweise durch Flugstaub ersetzt wird.

5. Verfahren nach Anspruch 1 und 2, dadurch abgewandelt, dass der Zement ganz oder teilweise durch Kaolin ersetzt wird.

6. Verwendung der nach den Ansprüchen 1 bis 4 hergestellten Mörtel nach ihrem Erstarren und gegebenenfalls Zerkleinern als Bodenverbesserungsmittel.

7. Verwendung der nach dem Verfahren gemäss den Ansprüchen 1 bis 4 hergestellten Mörtel nach ihrem Erstarren als Füllmaterial oder in Form von Steinen als Baumaterial.

8. Verwendung der nach dem Anspruch gemäss Anspruch 5 hergestellten Massen in Form von gebrannten Steinen als Baumaterial.

9. Verwendung der nach dem Verfahren nach Anspruch 5 hergestellten Massen nach Pelletieren und Erhitzen auf etwa 1250°C als Ersatz für Tonerdepellets oder Bims.


**Claims**

1. A process for the disposal of industrial sludges by use of cement, characterised in that they are mixed in a proportion by weight of from 10 : 1 to 1 : 10 with coarse-grained to fine-grained powders or sludges, consisting of proportions by weight of about 2 : 1 to 1 : 2 of acid sludges, acid tars and/or acid oils on the one hand and of an oxide mixture containing predominantly iron oxide on the other hand, following which the resultant mixture while forming a mortar-like mass is mixed with a cement.

2. A process according to claim 1, characterised in that the oxide mixture contains predominantly iron in the form of $Fe_2O_3$.

3. A process according to claims 1 and 2, modified in that the cement is wholly or partially replaced by lime in the form of slaked lime or quicklime.

4. A process according to claim 1 and 2, modified in that the cement is wholly or partially replaced by flue dust.

5. A process according to claim 1 and 2, modified in that the cement is wholly or partially replaced by kaolin.

6. Use of the mortar produced according to claims 1 to 4, after it has set and if necessary been crushed, as a means of soil improvement.

7. Use of the mortar produced after the process according to claims 1 to 4, after it has set, as filling material or, in the form of blocks, as construction material.

8. Use of the masses produced after the process according to claim 5 as construction material in the form of fired bricks.

9. Use of the masses produced after the process according to claim 5, after pelleting and heating to approximately 1250°C, as a substitute for argillaceous earth pellets or pumice.


**Revendications**

1. Procédé de récupération des boues industrielles en utilisant du ciment, caractérisé en ce qu'on mélange les boues à traiter, dans des proportions pondérales allant de 10 : 1 à 1 : 10, avec des poudres ou des boues de granulométrie grossière ou fine, contenant, d'une part, des résidus acides à base de cambouis, de goudrons et/ou d'huiles, à raison d'un taux pondéral allant de 2 : 1 à 1 : 2 environ et, d'autre part, des mélanges d'oxydes essentiellement à base d'oxyde de fer; et en ce que, après avoir formé avec ces composants une pâte analogue à un mortier, on mélange cette pâte avec un liant tel qu'un ciment.

2. Procédé selon la revendication 1, caractérisé en ce que le mélange d'oxydes contient principalement du fer sous forme de $Fe_2O_3$.

3. Procédé selon l'une des revendications 1 ou 2, caractérisé en ce qu'on remplace le ciment, en totalité ou en partie, par de la chaux, sous forme de chaux hydratée ou de chaux vive.

4. Procédé selon l'une des revendications 1 ou 2, caractérisé en ce qu'on remplace le ciment, en totalité ou en partie, par de la cendre volante.

5. Procédé selon l'une des revendications 1 ou 2, caractérisé en ce qu'on remplace le ciment, en totalité ou en partie par du kaolin.

6. Utilisation des mortiers préparés conformément aux revendications 1 à 4, après durcissement de ces mortiers et éventuellement après concassage, comme agent d'amélioration des sols.

7. Utilisation des mortiers préparés conformément aux revendications 1 à 4, après durcissement, comme matériau de remplissage ou comme matériau de construction sous forme de briques ou de parpaings.

8. Utilisation des pâtes préparées conformément à la revendication 5 comme matériau de construction, sous forme de briques ou de parpaings cuits.

9. Utilisation des pâtes préparées conformément à la revendication 5, après avoir confectionné des boulets soumis à une cuisson à 1 250°C, pour remplacer des boulets d'alumine ou des boulets de ponce.